# EUROPEAN PATENT APPLICATION

(11) **EP 4 202 290 A1**
(43) Date of publication of application: **28.06.2023**
(21) Application number: 21216510.4
(22) Date of filing: 21.12.2021
(51) Int. Cl.: F21S 41/148, F21S 43/14, F21S 43/237, F21S 43/245, F21S 43/247, F21Y 107/70, B60Q 1/00, G01S 17/86

(54) **AUTOMOTIVE LIGHTING DEVICE AND AUTOMOTIVE VEHICLE**

(71) Applicant: Valeo Vision, 93012 Bobigny Cedex (FR)
(72) Inventor: MIMOUN, Mickael, 93012 BOBIGNY (FR); RENAUD, Pierre, 93012 BOBIGNY (FR); EL IDRISSI, Hafid, 93012 BOBIGNY (FR); PLANCHE, Gregory, 93012 BOBIGNY (FR)
(74) Representative: Valeo Visibility

(57) **Abstract**

The present invention refers to an automotive lighting device comprising a substrate (1, 9), a solid-state light source (2) directly arranged on the substrate, an optical element (8) configured to project the emitted light outside the lighting device, a luminous sensor (4) configured to acquire a portion of a reflection (7) of the projected light and processing means (3). The luminous sensor (4) is directly arranged on the substrate (1, 9) but oriented in a detection direction which is different from the emission direction.

## Description

This invention is related to the field of automotive lighting devices, and more particularly, to the ones used to detect objects surrounding the vehicle.

Driving assistance comprises the use of sensors to inform the driver (or to directly inform the vehicle) of objects surrounding the vehicle. This is extremely useful for autonomous driving, but also to help a potential driver to avoid obstacles on the road, in the case of low visibility conditions (due to weather conditions, deficient lighting surrounding the vehicles or the vehicle going reverse, for example).

To achieve this goal, sensors play a crucial role, since they receive the information from the exterior of the vehicle, containing the data that will be interpreted in order to create a mapping of the surrounding objects.

There are many different sensors which are intended to accomplish this mission. Most of them use ultrasound, with acoustic pulses. Cameras are also adapted to acquire infrared or visible ambient light.

However, these different sensors are usually located in the bumper, or the front fascia of the vehicle. Some tentative integrations of these sensors in a headlamp have been done but not concluent because they take up a lot of space, and the behaviour of these sensors were impacted by the thermal increasement of the lighting device part.

The present invention provides an alternative solution for the problem of by means of an automotive lighting device which comprises:
- a substrate;
- at least one light source directly arranged on the substrate, configured to emit a light beam in an emission direction;
- an optical element configured to project the emitted light beam according to a projection direction which is different from the emission direction;
- a luminous sensor configured to acquire a portion of a reflection of the projected light beam, the luminous sensor being directly arranged on the substrate, and configured to detect light in a detection direction, which is different from the emission direction; and
- processing means configured to control the operation of the light source and to receive data from the luminous sensor, the processing means being directly arranged on the substrate.

This lighting device uses the light beam emitted by the light sources which are in charge of the driving lighting functions to obtain information about the surrounding objects. There is therefore no need to use an additional light source, or ultrasound devices. The same device which may be used for lighting functions as a Low Beam LB, a High Beam HB, a Daytime Running Light DRL, a Position Light PL, a Stop Light, a Reverse Light, a Corner Light CL, or a Turn Indicator TI, may be used also for objects detecting. Further, the same substrate may be used to arrange the light source and the light sensor. Thus, space is saved in the lighting device and smaller sizes are allowed so that the lighting device may be installed in different locations of the vehicle without major effect.

As the skilled person would undoubtedly construe, the emission direction is the main direction of the beams which are emitted from the light source, while the projection direction is the main direction of the beams projected by the optical element. Concerning the detection direction, it is the direction where the sensor elements are oriented to receive the maximum amount of light. In the event of a light cone, the main direction is understood as the direction of the cone axis.

In some particular embodiments, the light source is a solid-state light source.

According to the invention, the light source is a solid state light source. The term "solid state" refers to a light beam emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In some particular embodiments, the substrate is a flexible printed circuit board PCB, so that the direction perpendicular to the flexible printed circuit board in the arrangement location of the light source is different from the direction perpendicular to the flexible printed circuit board in the arrangement location of the luminous sensor.

In these cases, the typical arrangement are solid-state light sources directly arranged on a surface of the printed circuit board PCB. Since the emission direction and the receiving direction are not the same, the same printed circuit board PCB is bent due to its flexibility, so that different portions of the same surface may be oriented in different directions to achieve the arrangement needed by the emission-detection directions pair.

The skilled person is perfectly aware of the difference between a flexible printed circuit board and a rigid printed circuit board PCB. Despite the fact that every plastic material is «flexible», there is a big difference between the elastic properties of a flexible printed circuit board PCB, which may achieve deformations so that different portion of the same surface may form 90 degrees with each other, and the elastic properties of a rigid printed circuit board, which is not able to reach such a deformation without breaking.

In some particular embodiments, the substrate is a printed circuit board PCB comprising a first surface, a second surface opposite to the first surface and an edge between the first surface and the second surface, and the light source is arranged on the edge of the printed circuit board PCB.

In these alternatives, the different orientation is not achieved by bending the printed circuit board PCB, but by installing the light source in the edge of the same. Hence, edge light sources are used to achieve this aim.

In some particular embodiments, wherein the optical element is a light guide and the projection direction forms an angle between 60 and 120 degrees with respect to the emission direction.

In any of the previous alternatives, a light guide receives the light beam emitted by the light sources and projects it in the projection direction, which may easily form between 60 and 120 degrees with respect to the emission direction. Since the detection direction is usually similar to the projection direction, the light guide orientation is suitable for the purpose of the invention.

In some particular embodiments, the light source is located at a distance lower than 2.5 cm from the processing means.

Since room is saved in the substrate, the processing means may be located close to the light source, so that the preparation of the special features (frequency, signal shape, etc) of the emitted light is done without being disturbed by the effects of other objects.

In some particular embodiments, the lighting device further comprises additional solid-state light sources directly arranged on the substrate.

The same substrate may have different light sources. Some of them will emit light beam that will be received by the luminous sensor, other ones will emit light beam that will be received by other sensors, and the rest will emit light that is not intended to be received by any sensor, since the lighting device has to perform lighting and/or signalling functions beyond the sensing abilities.

In some particular embodiments, the luminous sensor is configured to receive the reflection of the projected light of at least two different light sources.

The luminous sensor may be configured to receive the reflected light beam which has been projected by more than one different emission. The discrimination of the light source may be done in terms of frequency, colour, wave shape, etc.

In some particular embodiments, the solid-state light sources comprise light emitting diodes LED or laser diodes.

These types of light sources are widely used in automotive vehicles for driving lighting functions. With the present invention, the same light sources may also be used for object detection.

In a second inventive aspect, the invention provides an automotive vehicle comprising an automotive lighting device according to the first inventive aspect.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
[Fig. 1] shows a general perspective view of some elements of an automotive lighting device according to the invention.
[Fig. 2] shows a general perspective view of some elements of a different embodiment of an automotive lighting device according to the invention.
[Fig. 3] shows an automotive vehicle with two lighting devices according to the invention.

In these figures, the following reference numbers are used for each of the following elements:
- 1: Printed circuit board
- 2: LEDs
- 3: Processing unit
- 4: Photodiode
- 8: Light guide
- 9: Flexible printed circuit board
- 10: Headlamp
- 11: Clearance lamp
- 12: Edge of the printed circuit board
- 100: Automotive vehicle
- d1: emission direction
- d2: projection direction
- d3: detection direction

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

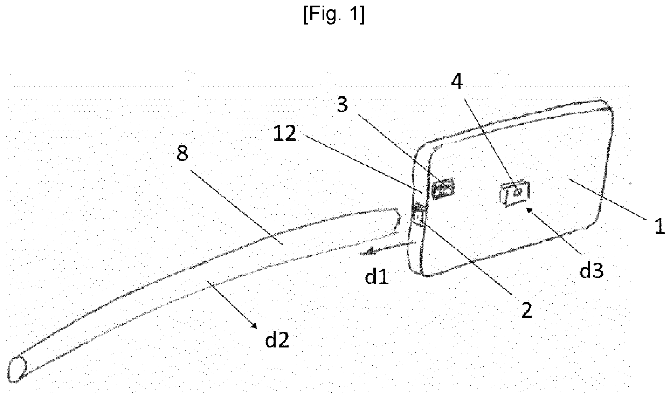

Figure 1 shows a general perspective view of some elements of a particular embodiment of an automotive lighting device according to the invention.

In this figure, the following elements are seen
- a printed circuit board 1 comprising a first surface, a second surface opposite to the first surface and an edge 12 between the first surface and the second surface;
- a light-emitting diode (LED) 2 directly installed on the edge 12 of the printed circuit board 1 and configured to emit light in an emission direction d1
- a light guide 8 configured to receive the emitted light and project it in a projection direction d2
- a photodiode 4 which is directly arranged on the first surface of the printed circuit board 1 and is configured to acquire a reflected light in a detection direction d3;
- a processing unit 3 configured to prepare features of the light to be emitted and to receive and process data from the photodiode 4.

The printed circuit board 1 is a standard rigid printed circuit board 1, in the sense that there is no need for this board to have any special feature.

The LED 2 is a LED which is adapted to be installed in the edge of a printed circuit board, so that, with a simple printed circuit board, an emission direction which is perpendicular to the main surface of the board is obtained.

The projection direction d2 is substantially perpendicular to the emission direction d1, so that the printed circuit board is orientated substantially perpendicularly to the projection direction. Hence, the detection direction will be substantially parallel to the projection direction.

The processing unit 3 is configured to receive power from a power source and prepare the frequency and shape of the light to be emitted by the LED 2. This processing unit 3 is located very close to the LED 2, merely at 2 cm from it. Thus, the high frequency signal is duly transmitted to the LED 2.

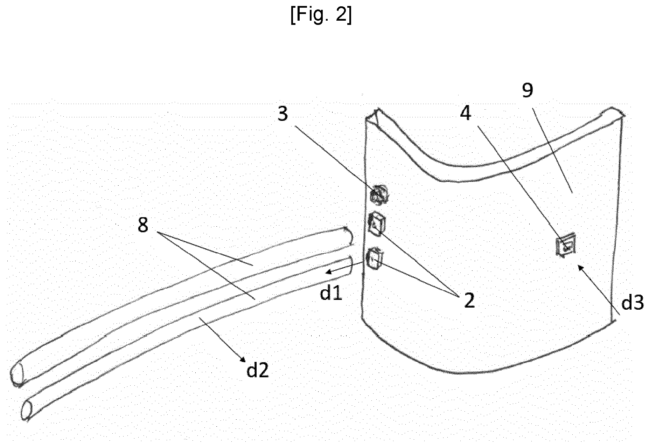

Figure 2 shows a general perspective view of some elements of a particular embodiment of an automotive lighting device according to the invention.

In this figure, the following elements are seen
- a flexible printed circuit board 9 comprising a first surface and a second surface opposite to it;
- two light-emitting diodes (LED) 2 directly installed on the first surface of the flexible printed circuit board 9 and configured to emit light in an emission direction d1
- two light guides 8 configured to receive the emitted light and project it outside the lighting device in a projection direction d2
- a photodiode 4 which is directly arranged on the first surface of the flexible printed circuit board 9 and is configured to acquire a reflected light in a detection direction d3;
- a processing unit 3 configured to prepare features of the light to be emitted and to receive and process data from the photodiode 4.

The flexible printed circuit board 9 is a printed circuit board with a flexible substrate and circuitry adapted to be flexed without breaking. The skilled person knows how to identify a flexible printed circuit board.

The LEDs 2 are standard LEDs installed in a zone of the flexible printed circuit board which is perpendicular to the emission direction d1.

The projection direction d2 is substantially perpendicular to the emission direction d1, so that the printed circuit board is orientated substantially perpendicularly to the projection direction in the zone where the LED 2 is installed.

The photodiode 4 is installed in the same face of the flexible printed circuit board 9 as the LEDs 2, since the board bends so that the zone where the photodiode 4 is installed is substantially perpendicular to the projection direction. Hence, the detection direction will be substantially parallel to the projection direction.

The same as in the previous case, the processing unit 3 is configured to receive power from a power source and prepare the frequency and shape of the light to be emitted by the LED 2. This processing unit 3 is located very close to the LED 2, merely at 2 cm from it. Thus, the high frequency signal is duly transmitted to the LED 2.

The photodiode is configured to detect the light reflected by an object with respect to the light projected by any of the light guides 8. Each LED emits in a different colour, so that the photodiode may easily discern if light comes from one of the LEDs or from the other.

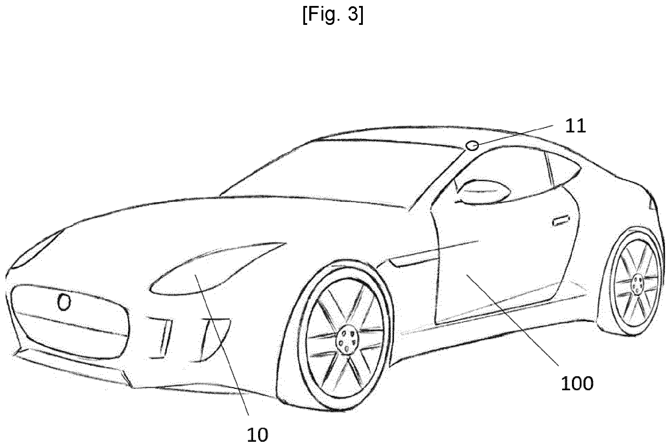

Figure 3 shows a general perspective view of an automotive vehicle according to the invention.

This vehicle 100 comprises two lighting devices according to the invention: a headlamp 1 and a clearance lamp 11.

The headlamp 1 is installed in an automotive vehicle 100 and comprises the lighting device which comprises, i.a., the elements shown above. The headlamp is therefore adapted to project light on the road and receive the reflection of an object which is located surrounding the vehicle, being further configured to detect the presence of such an object, due to the photodiode and the processing means.

The clearance lamp 11 is located on the top portion of the vehicle, and is also configured to project light and receive the reflected light. Due to its high position in the vehicle, surrounding objects may be more clearly detected.

## Claims

1. Automotive lighting device (10, 11) comprising
- a substrate (1, 9);
- at least one light source (2) directly arranged on the substrate, configured to emit light in an emission direction (d1);
- an optical element (8) configured to project the emitted light according to a projection direction (d2) which is different from the emission direction (d1);
- a luminous sensor (4) configured to acquire a portion of a reflection (7) of the projected light, the luminous sensor being directly arranged on the substrate (1, 9), and configured to detect light in a detection direction (d3), which is different from the emission direction (d1); and
- processing means (3) configured to control the operation of the light source and to receive data from the luminous sensor, the processing means being directly arranged on the substrate.

2. Automotive lighting device (10, 11) according to claim 1, wherein the substrate is a flexible printed circuit board (9), so that the direction perpendicular to the flexible printed circuit board (9) in the arrangement location of the light source (2) is different from the direction perpendicular to the flexible printed circuit board in the arrangement location of the luminous sensor (4).

3. Automotive lighting device (10, 11) according to claim 1, wherein the substrate is a printed circuit board (1) comprising a first surface, a second surface opposite to the first surface and an edge (12) between the first surface and the second surface, and the light source (2) is arranged on the edge (12) of the printed circuit board.

4. Automotive lighting device (10, 11) according to any of the preceding claims, wherein the optical element is a light guide (8) and the projection direction forms an angle between 60 and 120 degrees with respect to the emission direction.

5. Automotive lighting device (10, 11) according to any of the preceding claims, wherein the light source (2) is located at a distance lower than 2.5 cm from the processing means (3).

6. Automotive lighting device (10, 11) according to any of the preceding claims, further comprising additional solid-state light sources directly arranged on the substrate.

7. Automotive lighting device (10, 11) according to claim 6, wherein the luminous sensor is configured to receive the reflection of the projected light of at least two different light sources.

8. Automotive lighting device (10, 11) according to any of the preceding claims, wherein the light source is a solid-state light source.

9. Automotive lighting device (10, 11) according to the preceding claim, wherein the solid-state light sources comprise light emitting diodes or laser diodes.

10. Automotive vehicle (100) comprising an automotive lighting device (10, 11) according to any of the preceding claims.
